# EUROPEAN PATENT APPLICATION

(11) **EP 2 662 497 A1**
(43) Date of publication of application: **13.11.2013**
(21) Application number: 12382172.0
(22) Date of filing: 09.05.2012
(51) Int. Cl.: E02D 5/72, F03D 11/04

(54) **Wind turbine foundation**

(71) Applicant: Alstom Wind, S.L.U., 08005 Barcelona (ES)
(72) Inventor: Rodriguez Tsouroukdissian, Arturo, 08011 BARCELONA (ES); Lanca Coelho, Miguel, 08018 BARCELONA (ES); Santiago Lopez, Manuel, 08005 BARCELONA (ES)
(74) Representative: ZBM Patents

(57) **Abstract**

Wind turbine foundation comprising at least one substantially elongated pin associated with a wind turbine tower and at least one corresponding substantially elongated pile foundation to be inserted into a surface and adapted for receiving at least a portion of the length of the pin when in use, wherein the pin comprises an inserting end arranged opposite to a connecting end associated with the wind turbine tower and a stopping element is arranged inside the pile on a plane substantially transversal to a longitudinal axis of the pile, wherein the stopping element is adapted to receive said inserting end such that when the pin is inserted into the pile the inserting end is fitted in the stopping element. Furthermore, a wind turbine comprising such a foundation is described.

## Description

The present disclosure relates to wind turbine foundations, especially suitable for, but not limited to, wind turbine pile foundations in offshore foundations. The disclosure further relates to wind turbines comprising such foundations.

### BACKGROUND ART

Modern wind turbines are commonly used to supply electricity into the electrical grid. Wind turbines generally comprise a rotor with a rotor hub and a plurality of blades. The rotor is set into rotation under the influence of the wind on the blades. The rotation of the rotor shaft either directly drives the generator rotor ("directly driven") or through the use of a gearbox. The hub, gearbox (if present), generator and other systems are usually mounted in a nacelle on top of a wind turbine tower.

Wind turbines are often grouped together in so-called wind farms. It has become increasingly difficult to find suitable locations for wind farms on land. In many occasions, there has been a lot of opposition against placement of wind turbines due mainly to the noise produced by the wind turbines and aesthetic effects of the placement of wind turbines. Additionally, for wind turbines to be able to work efficiently, a windy and open area free from trees and buildings etc. is needed which is not always readily available.

For many reasons, it has thus become more popular to place wind turbines or wind parks in the sea, either close to the coast (near-shore) or offshore (sometimes referred to as "far-offshore"). Larger areas are available offshore, the wind may be more constant and of higher velocity on sea than on land and wind shear is generally reduced. Additionally, with reduced noise constraints, wind turbines can rotate at higher speeds. Furthermore, placing wind turbines far-offshore increase the aesthetics of the view from the shoreline.

The establishment of offshore wind turbines introduces new problems. An offshore wind turbine requires a foundation that withstands the combination of the wind stresses inherent in wind generation together with the additional forces of waves and currents in an offshore environment. If wind turbines are established far-offshore, the deeper waters may result in an increase in intensity of these natural forces. In general, in offshore wind turbines, loads are characterized by a very pronounced fatigue-inducing bending moment applied to the foundation of the wind turbine.

In some cases, offshore wind turbines may be floatingly arranged. In others, they may be arranged on foundations anchored to the seabed.

Traditionally, wind turbines anchored to the seabed have been supported on monopiles and gravity base structures. However, with the movement of wind turbines far-offshore, the employment of monopiles and gravity base structures as the base on which the wind turbines are placed has become less cost-effective and tower supports known as jackets or tripods on which the wind turbine tower is mounted are being used. These supports are mounted on piles buried in the seabed.

A well-known connection between these tower supports (jackets or tripods) and piles is a grouted connection. In a grouted connection, the grout is injected into a grouting chamber defined when a portion of the support is inserted in a pile previously driven into the seabed. Grout injection serves for the purpose of establishing a firm connection between the piles and the wind turbine tower supports. Grout also helps to reduce undesirable horizontal deflections and inhibits corrosion while increasing energy absorption capacity of the foundation.

A problem related to such grouted connections is how to maintain the supports in place while the grout hardens. In some cases a crane, or a crane vessel in offshore applications, from which the support is hung stays in the placement until complete hardening of the grout is reached. This may take a couple of weeks or more and is thus very expensive. This is also strongly dependent on weather conditions, which can lead to long delays in assembling. It is also known from e.g. document W02011010937 to connect a bracket to at least one of the fastening parts of the structure, arrange an elastic material on the bracket and displace the fastening part of the structure to an overlapping position with the base, e.g. pile, previously driven into the seabed.

However, there still exists a need for an efficient and cost-effective way of maintaining a wind turbine support in place while the grouted connection hardens in order to reduce at least partially mounting costs of placing wind turbines, especially for offshore foundations.

### SUMMARY

In a first aspect, a wind turbine foundation is provided. The foundation comprises at least one substantially elongated pin associated with a wind turbine tower and at least one corresponding substantially elongated pile foundation to be inserted into a surface and adapted for receiving at least a portion of the length of the pin when in use. The pin comprises an inserting end arranged opposite to a connecting end associated with the wind turbine tower. Furthermore, a stopping element is arranged inside the pile on a plane substantially transversal to a longitudinal axis of the pile, wherein the stopping element is adapted to receive said inserting end such that when the pin is inserted into the pile the inserting end is fitted in the stopping element.

All throughout the present description and claims, the term *pin* refers to an elongated connecting member, made e.g. of steel, extending downwards from a wind turbine tower support. The pins have a connecting end for attachment to the wind turbine tower through said wind turbine tower support, and an inserting end, opposite the connecting end. Wind turbine tower supports may comprise a jacket consisting of a lattice substructure that comprises a number of tubes. The tubes may be connected to each other by means of bracings, tubular joints and the like. And a transition piece may connect and support the lower part of the wind turbine tower to the jacket. In addition, the term pile refers to an elongated connecting member, made e.g. of steel. The piles are driven several tens of metres into a surface such as the ground in case of onshore wind turbines or the seabed in case of offshore wind turbines. The piles are shaped for receiving at least a portion of corresponding pins, that is, the pins can at least partially be inserted, i.e. starting from their inserting ends, into the corresponding piles when in use. For this purpose, the inserting end of the pins may be guided.

According to this aspect, when a pin is inserted into a pile, its inserting end, i.e. the free end that is opposite to the connecting end associated with the wind turbine tower, is fitted in an element of the pile and retained therein. This substantially restricts its possibility of movement in a vertical plane together with its possibility of lateral motion and rotation about the horizontal plane. This way, the pin remains in a substantially still position while e.g. the grout is being injected and/or during grout hardening without the need of having a crane supporting the pin and the rest of the wind turbine support. This reduces substantially the costs of mounting a wind turbine support, especially in offshore structures or offshore foundations.

Furthermore, such pin retention allows the wind turbine support to be kept in position without grout and/or allows the injection of grouting even under bad weather conditions as lateral motion of the support is substantially reduced.

A further advantage relates to the fact that the stopping element is arranged inside the pile and is adapted to fit the end of the pin that is furthest away from the wind turbine tower, i.e. the distal end which is the end of the pin that will remain closer to the surface on which the pile is buried when in use. This way it can also be used for reducing deviations on pin-pile concentricity, starting at the pin's lower end.

In some embodiments, the stopping element may comprise a central seat. This central seat may be designed complementary to the pin inserting end so that pin fitting into the seat is adequate. In some cases a body made of polymeric material may be arranged inside the central seat. This way steel-to-steel connection between the pin and the central seat is avoided. In preferred embodiments, the polymeric material may be a high grade polymer. Polymeric materials present a long life and have quite a good predictable behavior under loading.

In some embodiments, the stopping element may further comprise a disc radially extending between the central seat and an inner surface of the pile. This way, it may also work as a blocking element for preventing contact between the grout and the surface when a grouted connection is established between the pin and the pile. Furthermore, the presence of such a disc contributes to maintain the rest of the pile which is not inserted into the surface, i.e. the portion that will receive the pin, free of ground material removed during burying of the pile into the surface. This is so because the stopping element is arranged inside the pile and adapted to fit the end of the pin that is furthest away from the wind turbine tower, i.e. the distal end which is the end of the pin that will remain closer to the surface on which the pile is buried when in use.

In other embodiments, a plurality of bars may be radially provided between the central seat and the inner surface of the pile. The free space in between the bars may thus allow ground material of the surface to pass through thus facilitating the insertion of the pile into the surface. This entails the possibility of a deeper insertion of the pile into the surface e.g. leaving the stopping element buried underneath the seabed level. The portion of the pile that remains cantilevered may thus be reduced, especially part of the portion of the pile that will house the grout, when a grouted connection is established between the pile and a pin inserted therein.

In these cases, once the ground material removed upon insertion of the pile is extracted and leaves the stopping element free from ground material, disc segments may further be provided in between the bars. This way, a barrier for preventing contact between the grout and the surface may also be established. The disc segments may be made of the same material or a material different than that used for the seat and the bars, i.e. a cheaper material in order to reduce costs.

In some embodiments, the inserting end may be a guiding end adapted to be fitted in the stopping element. This way, it guides the insertion of the pin into the pile. This is of special interest in those cases in which the pile driven into the surface is not fully vertical. In these embodiments, such an inserting end may comprise a protruding element for centralizing the pin when it is being inserted in the pile. This helps overcoming misalignments with respect to verticality of the pile driven into the surface. A misalignment of the buried pile could occur due to external factors such as the type of soil in which it is being inserted. A deviation in the verticality of the pile may complicate mounting of the pin and the rest of the wind turbine support structure, especially when tripods or jackets are being used, as they usually comprise four legs having each a pin that needs insertion into a pile substantially simultaneously. Furthermore, with such a protruding element contacts between the pin and the pile, especially the pin inserting end, are substantially reduced during insertion. A risk of damaging the inserting end before it reaches the stopping element is thus substantially reduced and its fitting inside the stopping element is adequate.

In some embodiments, a grouting chamber may be defined between the pin and the pile when in use i.e. when the pin is at least partially inserted into the corresponding pile, and at least one of the pin and the pile may be provided with one or more connecting plates extending inside said chamber. In these embodiments, the stopping element may be arranged underneath the grouting chamber. This means that the stopping element may represent the lower end of the grouting chamber. Such a grouting chamber may be suitable for receiving grout. The connecting plates may be provided with holes through which the grout passes when in use.

As used herein the term *grout* includes any cementitious settable material or mixture of settable materials. Grout is used in the present foundation to hold a wind turbine tower support. The grout connection thus formed is subjected to compressive and shears load transfer at the chamber.

Such foundations comprising connecting plates arranged inside the grouting chamber provide a very strong connection of the wind turbine to the ground with a high load capacity in terms of high shear resistance. Furthermore, since the load transition takes place by the grout passing through the holes in the plate, higher compression capacity can be allowed and therefore also an increased shear resistance is achieved.

Another aspect provides a wind turbine comprising a foundation substantially as hereinbefore described.

Additional objects, advantages and features of embodiments of the wind turbine foundation will become apparent to those skilled in the art upon examination of the description, or may be learned by practice thereof.

### BRIEF DESCRIPTION OF THE DRAWINGS

Particular embodiments of the present wind turbine foundation will be described in the following by way of non-limiting examples, with reference to the appended drawings, in which:
Figure 1 shows a general elevational view of an offshore wind turbine;
Figure 2 shows a diagrammatic partial view of an embodiment of the present wind turbine foundation;
Figure 3 shows an elevational sectional partial view of a wind turbine foundation according to an embodiment;
Figure 3a shows an enlarged view of the area enclosed by the dashed lines of figure 3;
Figures 4a shows a perspective sectional view of a stopping element according to a second embodiment;
Figure 4b shows a partial top view of a foundation according to the second embodiment of stopping element shown in figure 4a;
Figures 5a and 5b show each an elevational sectional partial view of other embodiments of the present wind turbine foundation; and
Figure 5c shows a diagrammatic enlarged elevational view of a connecting plate.

### DETAILED DESCRIPTION OF EMBODIMENTS

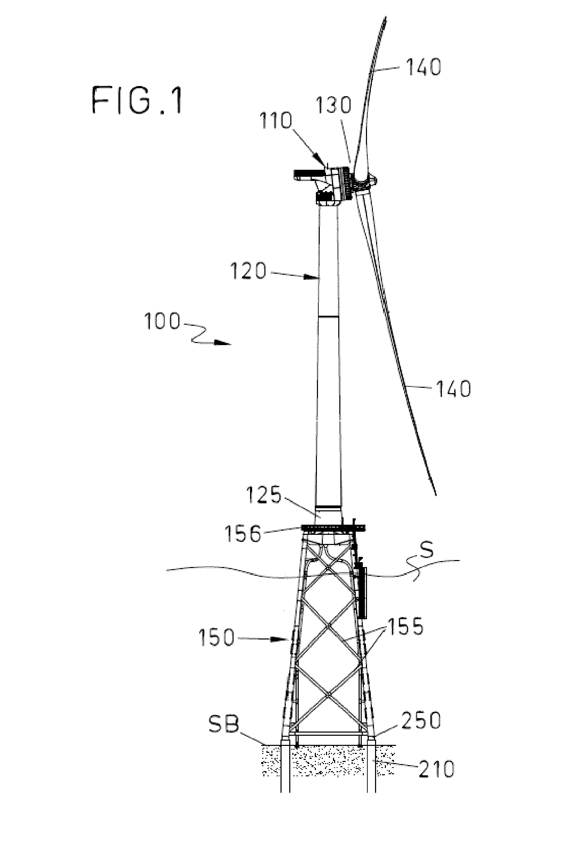

Figure 1 shows an offshore wind turbine 100 installed on the sea S. The offshore wind turbine 100 may comprise a nacelle 110 that may be fitted at an upper end of a wind turbine tower 120. The nacelle 110 may be provided with a rotor hub 130 provided with blades 140 for capturing the action of the wind for electricity production.

In the example shown in figure 1 a wind turbine jacket substructure 150 may be provided, extending downwards from a platform 156 arranged at a bottom portion of a transition piece 125. The transition piece 125 may be provided for connecting the platform 156 (and / or the jacket) to the bottom portion of the wind turbine tower 120. The jacket substructure 150 may be formed from a number of tubes 155 connected to each other. According to this example, the wind turbine foundation comprises (from top to bottom) a wind turbine tower, a transition piece, a platform and a jacket substructure.

Other configurations are also possible such as those comprising (from top to bottom) a wind turbine tower 120, a transition piece 125, a jacket substructure 150 and a small platform attached to the jacket or the transition piece which is only for maintenance operations and access.

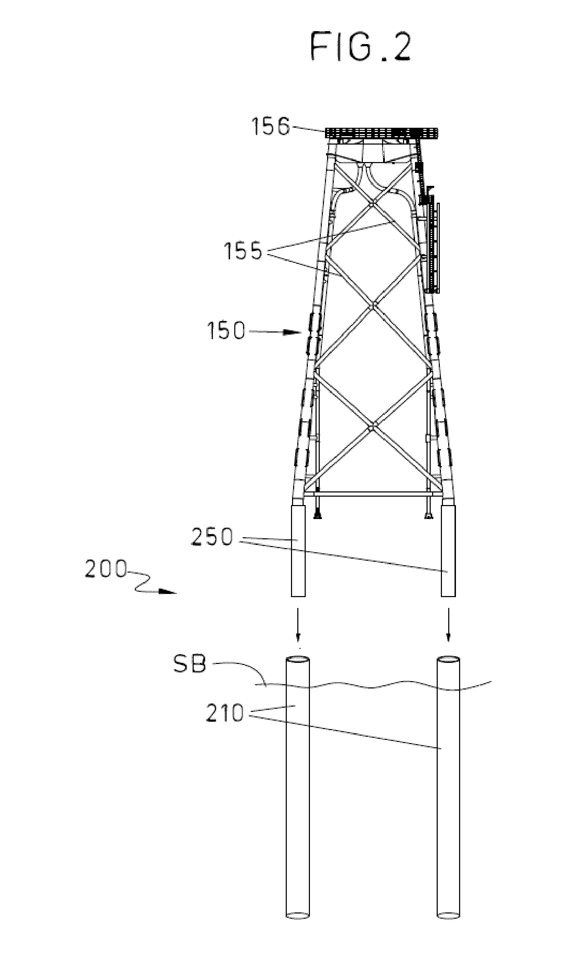

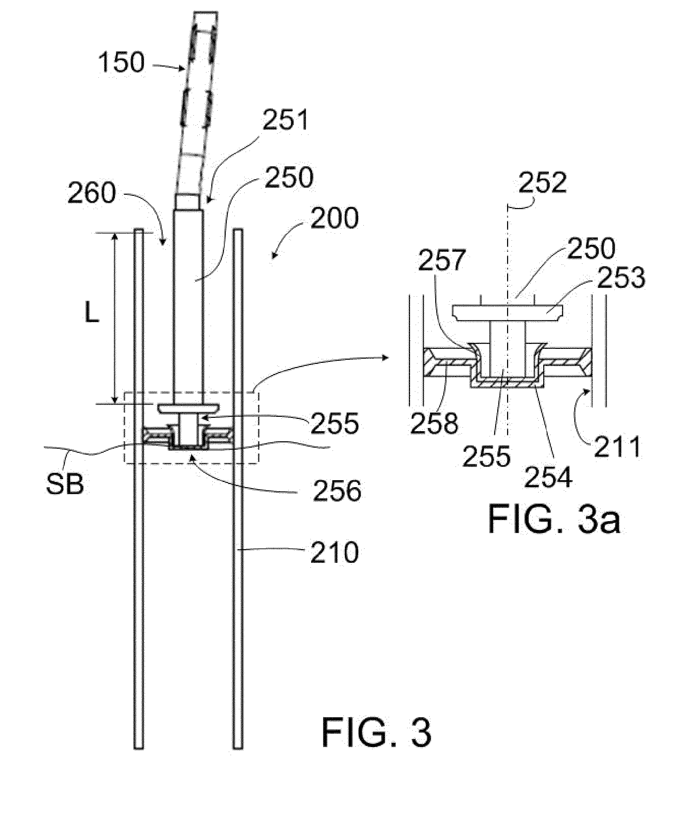

Figure 2 shows that the wind turbine tower 120 may be connected through the jacket substructure 150 with the seabed SB. In the present particular non-limiting embodiment, the wind turbine foundation 200 may comprise four piles 210 (only two are shown). Figures 2 further shows that the piles 210 may consist of elongated cylindrical connecting members made of steel. The piles 210 may be driven, i.e. inserted, into the seabed SB. The foundation 200 may further comprise four (only two are shown) corresponding substantially elongated cylindrical pins 250. Each pin 250 may have a connecting end (see figure 3) and an opposite inserting end (see figure 3). The pins 250 may be attached to and extend downwards from the jacket substructure 150 of the wind turbine through their connecting ends.

The piles may be shaped and sized for receiving at least a portion of the length (L) of the corresponding pins. For this purpose the inner diameter of the piles may be larger than the outer diameter of the corresponding pins. The inserting end of the pins, i.e. those free ends opposite to the ones that are attached to the jacket substructure, may be slightly tapered for ease its insertion into the piles.

Figure 3 shows a partial view of a wind turbine foundation200 in which a pin 250 may already be inserted into a pile 210. The pin 250 may comprise an inserting end arranged opposite to a connecting end 251 for attachment with the wind turbine jacket substructure 150. The inserting end may be a guiding end 255 and it may be provided at a lower portion of the pin 250, opposite to the connecting end 251. A stopping element 256 may be arranged inside the pile 210 on a plane substantially transversal to a longitudinal axis (see figure 3a) of the pile 210.

Figure 3a shows an enlarged view of the area enclosed by the dashed lines of figure 3 in which a stopping element 256 may have a guiding end 255 of a pin 250 fitted therein. As mentioned before, the stopping element 256 may be arranged inside the pile 210 on a plane substantially transversal to a longitudinal axis 252 of the pile 210.

As further shown in the example of figure 3, the guiding end 255 may comprise a cross-section which is smaller than that of the rest of the pin 250. In the intersection of these two cross-sections, the pin 250 may comprise a protruding element, e.g. an annular ring or disc 253 for guiding and/or centralizing the pin 250 when it is being inserted into the pile 210.

The stopping element 256 may be radially attached to an inner side of the pile 210. In some cases it may be welded to an inner wall 211 of the pile 210. Other ways for arranging such stopping elements in the piles may be foreseen such as e.g. integrally formed with the pile. In some cases, the stopping element may be made of the same material as that of the piles, e.g. steel and in others it may be made of a different type of steel.

The example shown in figure 3a shows a stopping element that may comprise a central seat 254 provided with a cup body 257 made of a polymeric material such as a high grade polymeric material in which body 257 the guiding end 255 of the pin may be fitted. Furthermore, a disc 258 may radially extend between the central seat 254 and the inner wall 211 of the pile.

Figure 3 further shows that a grouting chamber 260 may be defined between the pile 210 and the pin 250 inserted therein. When both, pin and pile, are substantially cylindrical in shape, the chamber 260 may be formed by the annular space between the pin 250 and the pile 210 when the former is at least partially inserted into the latter. The stopping element 256 may be provided underneath such a grouting chamber 260 and it may thus constitute a lower end of the chamber. In those embodiments in which the stopping element comprises a disc radially extending between the central seat and the inner wall of the pile such a disc may act as a blocking element for the grout, thus avoiding contact between the grout and the surface in which the pile is buried.

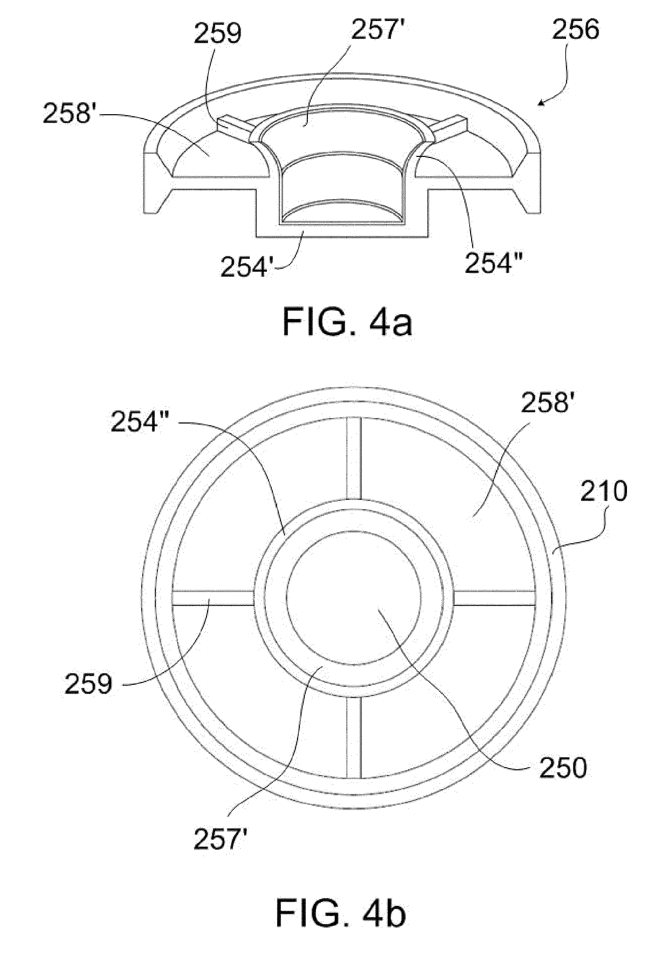

Figure 4a shows a stopping element 256 according to a different embodiment in which the central seat 254' may comprise an upward protrusion 254" integrally made with the central seat 254' such that both, the central seat 254' and the upward protrusion 254", define a cup shaped seat. Such a cup shaped seat may comprise a cup body 257' which may be made of a polymeric material such as a high grade polymeric material, extended on its inner surface. The guiding end of the pin will be retained in such a cup body thus limiting its movement on a vertical plane at the same time as limiting its lateral motion and rotation about the horizontal plane.

The stopping element 256 shown in the example of figure 4a may further comprise a plurality of bars 259 (only two are shown) radially extending between the central seat 254' and the inner wall of the pile (not shown). In these cases, the insertion of the pile into the seabed may be facilitated and the pile can be inserted deeper into the seabed, thus reducing the portion of the pile that remains cantilevered (unburied), especially part of the grouted chamber that may be defined inside the pile as explained in connection with figure 3.

In the example of figure 4a, disc segments 258' may further be provided in between these bars 259 in order to establish a partition between the grouting chamber and the seabed.

Figure 4b shows a top view of a wind turbine foundation according to a second embodiment in which the stopping element shown in figure 4a is arranged inside a pile 210. Figure 4b shows that the cup body 257' made of a polymeric material may be concentrically arranged in the upward protrusion's 254" inner surface (and in central seat's inner surface). In this example four bars 259 may be provided in a cross configuration between the central seat and an inner wall of the pile. It should be clear that other number of bars and in other configurations may be foreseen.

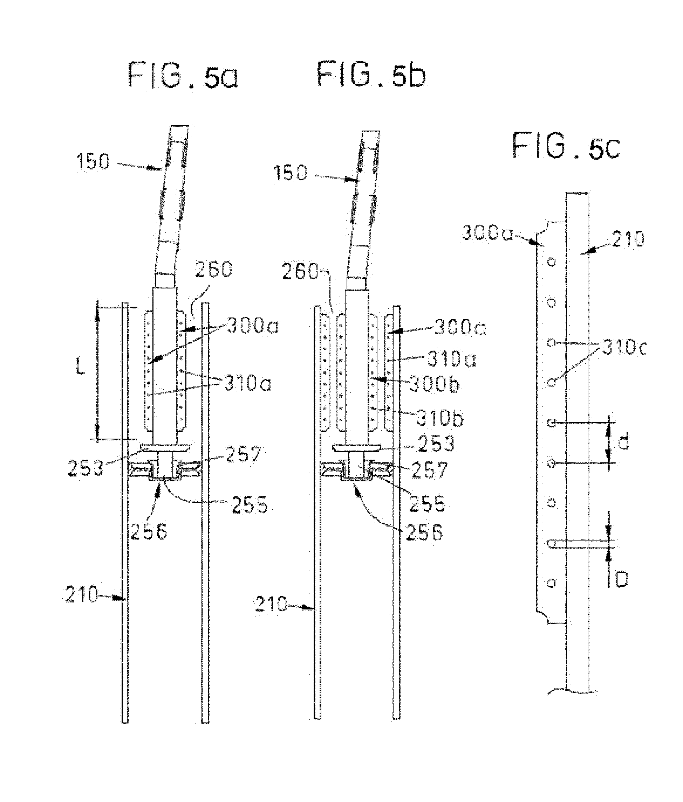

Figures 5a and 5b show different wind turbine foundations according to different embodiments in which at least one connecting plate 300a, 300b extending inside the grouting chamber 260 may be provided.

The connecting plates 300a, 300b may be made e.g. of high grade steel and may be provided with one or more holes 310a, 310b through which the grout passes when in use. The arrangement of the connecting plates may be such that their length dimension extends lengthwise within the chamber and their width dimension extends through a gap of the chamber defined between the pile and the corresponding pin at least partially fitted therein. In some cases at least one portion of such length and width dimensions may extend out of the grouting chamber.

The connecting plates 300a, 300b may be attached to the pins 250 or the piles 210, or both, such that the plates 300a, 300b radially extend inside the grouting chamber 260. The attachment of the connecting plates 300a, 300b to the pins 250 and/or the piles 210 may be carried out through a single weld pass process. This way the time involved in the welding process with respect to the well-known shear keys which may be used in order to increase capacity and stiffness of a pin-pile connection is substantially reduced. The welding process of shear keys involves several welding passes as welding is required on the outer surface of the pins and on the inner surface of the pile.

An example of such connecting plates is the so called Perfobond connectors which consist of plates with several openings or holes formed therein. The holes may preferably be circular but other shapes such as oval, polygonal or similar shapes may also be foreseen. Perfobond connectors are highly efficient in high axial loaded structures such as piled foundations in offshore wind turbines.

In some embodiments, one or more connecting plates/Perfobonds may extend at least partially across the inside of the grouting chamber. In others, the one or more connecting plates/Perfobonds may extend inside the chamber such that they are not aligned with a centre, i.e. the longitudinal axis of the pin and/or pile. In embodiments, a combination of both connecting plates/Perfobonds may also be possible.

In embodiments, one or more connecting plates may be radially distributed along the outer surface or perimeter of the pin and/or the inner surface or perimeter of the pile.

In embodiments, one or more connecting plates/Perfobonds may be arranged symmetrically around the surface of the pin and/or the pile. In general, the connecting plates may be evenly distributed on the outer perimeter of the pin and/or the inner perimeter of the pile. However, in some cases, the connecting plates may be arranged only in some portions of these perimeters.

In the example shown in figure 5c, some design parameters of a Perfobond connecting plate 300a such as the ratio of the distance d between the centres of two adjacent holes 310a with respect to the diameter D of the holes are shown. In the example, such ratio may lay between 2.20 to 2.40. In some cases, the radio of the distance between two adjacent connecting plates arranged along the perimeter of the pin and/or pile, or both, may range from ¹/₂ to 1/16.

Although only a number of particular embodiments and examples of the present wind turbine foundation have been disclosed herein, it will be understood by those skilled in the art that other alternative embodiments and/or uses and obvious modifications and equivalents thereof are possible. Furthermore, the present disclosure covers all possible combinations of the particular embodiments described. Thus, the scope of the present disclosure should not be limited by particular embodiments, but should be determined only by a fair reading of the claims that follow.

## Claims

1. Wind turbine foundation comprising at least one substantially elongated pin associated with a wind turbine tower and at least one corresponding substantially elongated pile foundation to be inserted into a surface and adapted for receiving at least a portion of the length of the pin when in use, wherein the pin comprises an inserting end arranged opposite to a connecting end associated with the wind turbine tower and a stopping element is arranged inside the pile on a plane substantially transversal to a longitudinal axis of the pile, wherein the stopping element is adapted to receive said inserting end such that when the pin is inserted into the pile the inserting end is fitted in the stopping element.

2. Wind turbine foundation according to claim 1, wherein the stopping element is radially arranged on an inner surface of the pile.

3. Wind turbine foundation according to any of claims 1 or 2, wherein the stopping element is welded to an inner surface of the pile.

4. Wind turbine foundation according to any of claims 1 - 3, wherein the stopping element comprises a central seat.

5. Wind turbine foundation according to claim 4, wherein a body made of polymeric material is arranged at least partially inside the central seat.

6. Wind turbine foundation according to any of claims 4-5, wherein the stopping element further comprises a disc radially extending between the central seat and an inner surface of the pile.

7. Wind turbine foundation according to any of claims 4-5, wherein the stopping element further comprises a plurality of bars radially extending between the central seat and an inner surface of the pile.

8. Wind turbine foundation according to claim 7, wherein disc segments are arranged in between the bars.

9. Wind turbine foundation according to any of claims 1-8, wherein the inserting end is a guiding end adapted to be fitted in the stopping element.

10. Wind turbine foundation according to claim 9, wherein the inserting end comprises a cross-section which is smaller than that of the rest of the pin.

11. Wind turbine foundation according to any of claims 9-10, wherein the inserting end comprises a protruding element for centralizing the pin when the pin is being inserted in the pile.

12. Wind turbine foundation according to any of claims 1-11, wherein both the pin and the corresponding pile foundation are substantially cylindrical in shape.

13. Wind turbine foundation according to any of the preceding claims, wherein a grouting chamber is being defined between the pin and the pile when in use for receiving grout and at least one of the pin and the pile is provided with one or more connecting plates extending inside said chamber, the connecting plates being provided with holes through which the grout passes when in use.

14. Wind turbine comprising a foundation according to any of claims 1-13.
